# EUROPEAN PATENT APPLICATION

(11) **EP 1 253 723 A1**
(43) Date of publication of application: **30.10.2002**
(21) Application number: 01303681.9
(22) Date of filing: 23.04.2001
(51) Int. Cl.: H04B 1/52

(54) **Transmitter/receiver device with re-configurable output combining**

(71) Applicant: LUCENT TECHNOLOGIES INC., Murray Hill, New Jersey 07974-0636 (US)
(72) Inventor: Fischer, Georg, Dr., Nuremberg 90419 (DE); Ritter, Kai-Uwe, 91154 Roth, Bavaria (DE)
(74) Representative: Sarup, David Alexander

(57) **Abstract**

The invention relates to transmission devices for a transmission system, especially for mobile radio system, comprising at least two transmission units each of which having a transmission branch (1, 2) with a signal generating chain (11, 21) and signal amplifying chain (12, 13, 14, 22, 23) wherein the outputs of the signal amplifying chains are connected to a hybrid-combiner (30). An object of the invention is to provide an improved transmitting device, in particular, to reduce the amount of components to be used by simultaneously providing a significant increase of effectiveness. The invention proposes to provide such a transmission device with means for connecting (34, 35a, 35b, 35c) each output port (30a, 30b) of the hybrid-combiner to a separate antenna. An advantage of such inventive solution is based on the fact that the components necessary to realize a transmission device, that is flexible in particular with regard to mutually combined carriers for transmitting with high capacity based on different output powers can be reduced significantly in comparison to a known state of the art.

## Description

The invention relates to a transmission device for a transmission system, especially for mobile radio system comprising at least two transmission units each transmission unit having a transmission branch with a signal generating chain for providing a carrier and a signal amplifying chain wherein the outputs of the signal amplifying chains are connected to a hybrid-combiner as well as to a transmission and reception device comprising at least one such transmission device.

In mobile radio systems usually transmission and reception units are incorporated within cabinets or radio modules of so called base transceiver stations (BTS). Such base transceiver stations usually serve a plurality of radio cells. Depending on the specific communication network normally at least two carriers are provided for each radio cell for the transmitting of data and/or information. Furthermore, to operate within a radio cell in diversity mode basically two antennas have to be provided for each carrier with each antenna adapted to be used for the transmission and the reception. However, for providing the functionality of transmitting and receiving so called diplexers for selecting the transmit-frequency band and the receive-frequency band are necessary.

In particular, due to the growing interest in mobile radio an increasing of the number of carriers per cell is the result. This can be achieved by adding further cabinets or radio modules. However, due to the present requirements in providing a radio module there is simultaneously a demand for a higher number of usable carriers in the same amount of space while keeping the production and/or operating costs at least at the same level or advantageously decreasing the cost per carrier at the same time.

Furthermore, when a mobile network is setup it is necessary to operate at a high transmitter output power for covering the relative large cells since initially only small numbers of cells and also carriers are provided. However, based on an ever increasing of the number of subscribers both the number of radio cells and the number of carriers per radio cell have to be increased, accordingly. These radio cells, however, are smaller and can be served at a lower transmitter output power.

Moreover, many of the network providers are operating within pre-defined frequency bands and providing more than one standard of mobile radio such as for example GSM (Global System for Mobile Communication), UMTS (Universal Mobile Transmitting System), TDMA (Time Division Multiple Access) with their radio networks. Thus the radio modules should be constructed to be used for broad band signals and for narrow band signals.

Additionally, for new data services like GPRS (General Packet Radio System) and EDGE (Enhanced Data rate through GPRS Evolution) a high output power at antenna connectors are needed to provide a good coverage with these services.

Thus, there is a further need to provide radio modules which are flexible in use and operation.

According to the co-pending European Application 00307166.9 it is suggested to include two radios into one housing together with the necessary hybrid combining and the provided two carriers are combined to one radio frequency output. This is saving a lot of cabling and reduces cost. In addition the dual carrier radio can be used in a mode where both carriers operate at the same frequency as a single carrier radio. Then the output power can be 6dB higher in that mode. However, one of the drawbacks is, that the hybrid-combiner has a 3dB lost for each carrier. Since, as discussed above, usually two transmit/receive antennas are used per sector or radio cell, in small configurations with two carriers per radio cell one transmitter unit could be connected to each antenna. However, if the output is already combined this is not possible anymore.

An object of the invention is to provide an improved and more flexible transmitting device with regard to the present state of the art and, in particular, to reduce the amount of components to be used by simultaneously providing a significant increase of effectiveness.

The inventive solution of the object is achieved by a transmission device and a transmission and reception device incorporating the features of claim 1 and claim 11, respectively.

Advantageous and/or preferred refinements or embodiments are the subject matter of the respective dependent claims.

According to the invention it is proposed to provide a transmission device comprising at least two transmission units each of which having a transmission branch with a signal generating chain and signal amplifying chain wherein the outputs of the signal amplifying chains are connected to a hybrid-combiner with means for connecting each output port of the hybrid-combiner to a separate antenna. An advantage of such inventive solution is based on the fact that the components necessary to realize a transmission device, that is flexible in particular with regard to mutually combined carriers for transmitting with high capacity based on different output powers can be reduced significantly in comparison to a known state of the art. Consequently, the inventive solution saves costs for manufacturer as well as for the network operator.

Moreover, due to reduced components the losses also are decreased and thus a power dissipation inside the radio module is saved. Moreover, the cell range can be extended with the same amount of power provided by a power amplifier by providing two combined carriers to two antennas, so that the power amplifier can be designed for less output power and can operate at a reduced power with less power dissipation.

Furthermore, when the network grows and more than two carriers per radio cell are required the radio module can easily be re-configured simply by means of the connection means to work in a second combining mode providing two carrier to one antenna.

According to a preferred refinement, one of the output ports of the hybrid-combiner is selectively connectable to a power resistor or to a separate antenna to easily accommodate a transmission device for operating on one or two antennas. If the connecting means for selectively connecting one of the output ports of the hybrid-combiner is located at the output of the hybrid-combiner the connecting means is uncritical in terms of phase and/or loss.

For detecting whether an output port is connected to an antenna or not it is suggested to connect a sense line having a high impedance at that output port which can be selectively connected. Preferably, a capacitor is coupled between that output port and the sense line to ensure a DC-decoupling.

To provide a non-custom specific device with a very easy access for the functionality of the re-configurable output combining the transmission device is constructed as a module incorporating the transmission units an the hybrid-combiner and with the connecting means mounted to that module.

Moreover, if the power resistor to which at least one of the output ports of the hybrid-combiner can be connected is located outside the module the components for the connecting means at the radio module can be reduced.

In a second alternative embodiment that power resistor resides inside the radio module and hence can be mounted to the heatsink of a power amplifier unit which causes less costs in comparison to an external power resistor with an extra heatsink.

Moreover, due to the incorporating of the hybrid-combiner and the transmission unit within one module less outlay is required for the cables which results in a further reducing of power loss.

By providing second connecting means such that the transmission branches are additionally connectable to one another for routing the same transmitted signal at least via the signal amplifying chains of the two transmission branches a very high output power is available which is in particular usefully in an initial condition of a network setup for covering the relative large cells. In addition, with such high output power broadband services can be provided with a good coverage.

According to very preferred embodiments, the inventive transmission device is part of a transmission and reception device additionally incorporating several reception units and especially is part of a base transceiver station preferably of a GSM-based mobile radio system.

Subsequently, the invention is exemplary described on the basis of a preferred embodiment of the invention and with regard to the accompanied drawings, in which
- Fig. 1: shows exemplary an inventive embodiment of the transmission part of the transmission device in an single antenna operation mode for high power or dual carrier mode,
- Fig. 2: shows an embodiment similar to that of Fig. 1 but with a dual antenna operation mode for the combining of two carriers additionally using an air combining, and
- Fig. 3: shows an embodiment having a re-configurable output combining according to the state of the art.

Prior to the detailed description it should be mentioned that whether is correspondence between the embodiments shown in the different figures, the same reference numerals are used and reference is made to the respective first description part thereof.

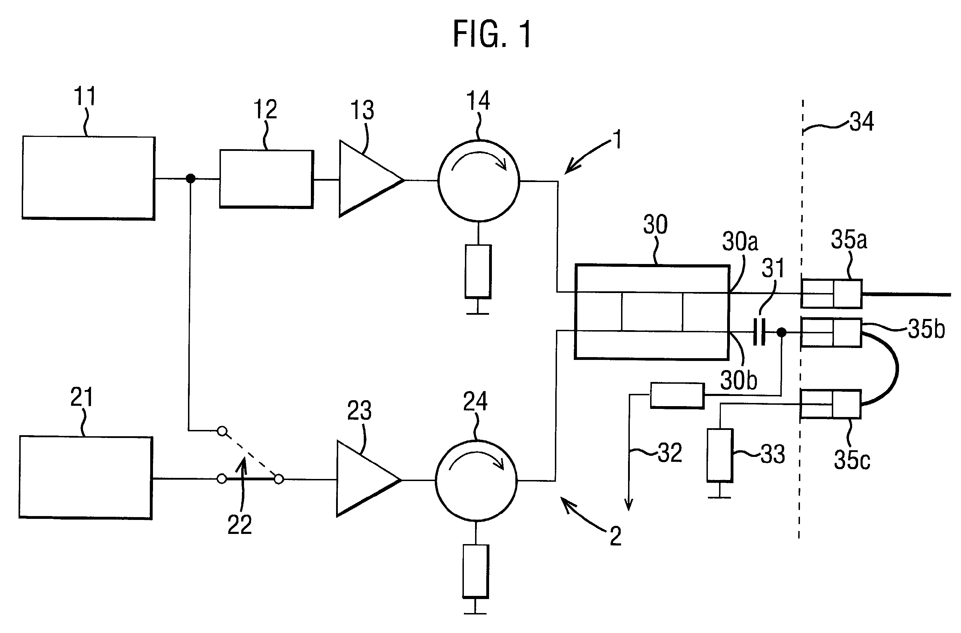

The circuit shown in Fig. 1 comprises two transmission units each having a respective transmission branch 1 and 2. Each transmission branch 1, 2 comprises a respective signal generating chain 11 and 21 at the end of which a modulated carrier signal is provided. Each transmission branch 1, 2 additionally comprises a signal amplifying chain containing a respective power amplifier 13, 23, an isolator 14, 24 and possibly a phase shifter 12 in one of the branches.

As it is exemplary depicted, the two transmission branches 1 and 2 are also connectable to one another via a combination switch 22 which enables the output of the signal generating chain in the first transmission branch 1 to be connected to the input of the signal amplifying chain in the second transmission branch 2.

A hybrid-combiner 30 is used to add or combine the two signals from the transmission branches 1 and 2 and two selectively output them as it is described below.

As known for a persons skilled in the art and as depicted in Fig. 1, the hybrid-combiner 30 has four ports, i.e. two input ports to which the signal amplifying chains of the transmission branches 1 and 2 are connected, a first output port 30a and a second output port 30b which normally is connected to a power resistor or dummy load 33 in which the losses appear.

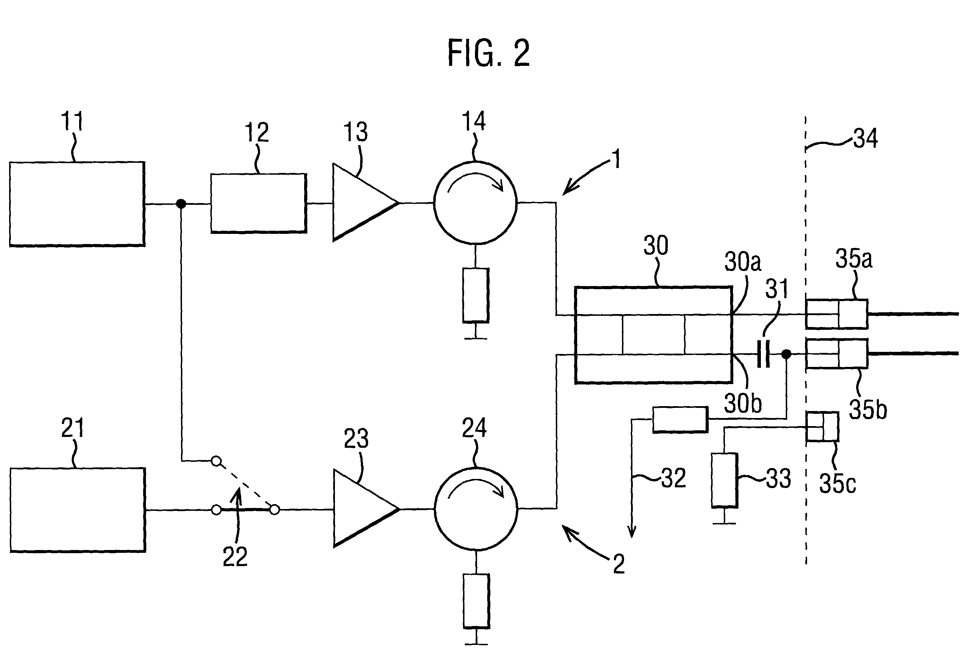

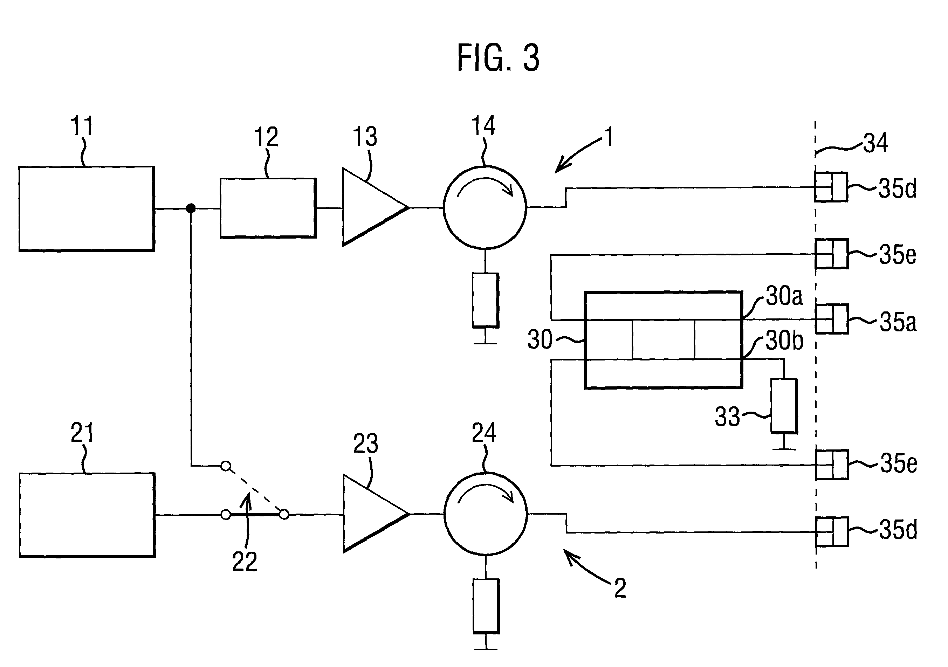

However, in contrast to a circuit according to the state of the art as can be seen in Fig. 3, the inventive solution provides a connection means 35b, 35c for the second output port 30b to selectively connect the output port 30b either to the power resistor 33 for example by means of a switch or jumper cable for interconnecting the connecting means 35b and 35c as can be seen in Fig. 1 or by using the output port 30b as additional output port operating to a separate antenna in one operating mode as it will described with regard to Fig. 2.

According to Fig. 1 the hybrid-combiner 30 is, in substantial, connected as usual, i.e. via a jumper cable between the connecting means 35b and 35c the output port 30b is connected to the power resistor 33. At the output port 30a an antenna cable preferably of a transmit/receive antenna is connected via an additional connecting means 35a assigned to that output port 30a.

Since the transmission units and the hybrid-combiner is preferably constructed as being a module, the connecting means 35a, 35b and 35c are provided at a connector pane or connector board 34 which is mounted to that module.

In the operation mode as depicted in Fig. 1, the hybrid-combiner 30 is used to mutually combine the two signals from the transmission branches 1 and 2 and to output them by means of the connecting means 35a to one transmission antenna.

In this case, when the carriers are combined losses of 3dB occur which amounts to half the consumed power. Accordingly, if the transmitter output power is 40W per transmission branch 1 and 2 the hybrid-combiner is operated according to Fig. 1 such that 2 x 20W are available in combination operating to one antenna. The combination losses due to the hybrid-combiner arise at the same level and is converted to heat in the power resistor 33.

If the combination switch 22 in Fig. 1 is thrown than the signal generating chain 11 in the transmission branch 1 operates on the two signal amplifying chains of both transmission branches 1 and 2, i.e. the two transmitter amplifying chains are operated at the same frequency and using the same data. In such a case the hybrid-combiner 30 can be driven such that the losses of 3dB which arise otherwise do not arise when the carriers are combined, i.e. the two input signals, coming from the transmission branches 1 and 2 are added at the combiner 30 if the phases coincide. If the two transmission branches 1 and 2 are each designed for 40W, than 80W are available at the output port 30a and can be transmitted via the connecting means 35a to the antenna. This operation mode therefore is particularly suitable for the initial structure of a network when individual radio cells still have a large surface area.

If the hybrid-combiner 30 used is a so called branch arm coupler comprising stripline structures an additional λ/4 line is used as phase shifting device 12 in order to bring about a 90° phase shifting in one of the branches 1 or 2 (shown in branch 1 in this case). The branch arm coupler than provides an in-phase addition of the signals from the two transmission branches 1 and 2. The phase shifting device 12 is preferably arranged directly upstream of the power amplifier 13 since the signal power upstream of the power amplifier 13 is low and hence the power loss also is still low. However, the phase shifting device 12 also can be arranged at the input of the hybrid-combiner 30.

Furthermore, at the output port 30b of the hybrid-combine 30 a sense line 32 is connected with a high impedance to detect if the connectors 35b and 35c are linked together or not. Accordingly, a radio controller does know whether the output port 30b is connected as being a load port using the power resistor 33 or is connected to a separate antenna as will be described with regard to Fig. 2. A capacitor 31 is provided in the connecting line of the output port 30b to provide the necessary DC-decoupling for the sense line.

Fig. 2 shows the embodiment according to Fig. 1 in a third operation mode using two separate antennas.

According to Fig. 2 the power resistor 33 is not connected to the output port 30b via the connecting means 35b and 35c. The output port 30b which usually is the load port of the hybrid-combiner 30 and hence is providing a 90° phase shift with regard to the output port 30a is connected by means of the connector 35b to a second separate antenna. Accordingly, the transmitter now has two output ports 30a and 30b both of which connected to a respective own antenna.

Having regard to the above description relating to the mutually combining of two carriers each provided with an output power of 40W per transmission branch 1 and 2 at each output port 30a, 30b, each of the two signals is present with half of the incident power, i.e. each of the output ports 30a, 30b is operated such that 2 x 20W are available at each output port 30a, 30b. Consequently, the total power at the two ports 30a and 30b is the same as the total incident power.

Thus in this operation mode the 3dB-hybrid-combiner loss does not occur since at each antenna connected to the respective connecting means 35a and 35b, each frequency is present with half the power and the combining of the power happens on the air. As known by a person skilled in the art transmitting the same signal from two antennas is in practice about the same as transmitting one signal with double the power from one antenna. However, it should be mentioned that the antennas must be separated such that they are not to much correlated. This will normally be the case as the antennas are used also for receive diversity and a typical distance is about 10λ.

With regard to a configuration according to the state of the art as depicted in Fig. 3 there are, instead of the three connecting means 35a, 35b and 35c according to the invention, five connecting means 35a, 35e and 35d necessary to provide a corresponding flexibility. In case of one antenna is connected to the hybrid combiner 30, i.e. through the connecting means 35a to the output port 30a, two connecting means 35d and 35e has to be linked by means of a switch or jumper cable for each transmission branch 1 and 2 respectively to combine the two carriers on one output or to provide a high-power mode by throwing the combination switch 22 such that the signal generating chain 11 is operating the signal amplifying chains of both transmission branches 1 and 2.

On the other hand side, in the case of two carriers per radio cell are respectively operated to one separate antenna the connecting means 35a and 35e are not fitted and the hybrid-combiner 30 is unused since the antennas are directly connected to the transmission branches 1 and 2, respectively by means of the connecting means 35d.

Thus the invention provides a very effective and flexible transmitter unit, especially for use in a base transceiver station preferably to be used within a GSM-based network which accordingly is adapted also to be used for new data services like GPRS and EDGE. Moreover, due to the inventive solution with the reduced amount of connecting means 35a, 35b and 35c entirely arranged downstream of the hybrid-combiner any additional loss presently caused by the connection means 35d and 35e linked together by jumper cables and added to the total loss of the line up is avoided. Consequently, with the inventive re-configurable output combining each of the connecting means, switches and/or jumper cables necessary for operating the branches to one antenna is uncritical in terms of loss and even in terms of phase since a switch or a jumper cable used have not to be matched in phase. Since merely three connectors 35a, 35b and 35c are required instead of five connectors according to the prior art a lot of space on a front panel 34 and/or on a power amplifier board can be saved.

The inventive solution also is covering embodiments wherein the power resistor 33, such as a dummy load for the output port 30b of the hybrid-combiner 30 is located outside a radio module and may be connected externally. However, although in this case at least the connector means 35c is not necessary at the radio module a separate heatsink for the power resistor then is required. Thus, the embodiment according to Fig. 1 and 2 with the power resistor 33 inside the radio module results in a cheaper arrangement since the power resistor 33 can be mounted to the heatsink of the power amplifier 13 or 23.

Finally, the invention is not restricted to GSM-based systems or networks but also can be used in a corresponding matter for transmission systems based on other standards such as for example on UMTS and/or TDMA standards and also for a combination of different standards.

## Claims

1. Transmission device for a transmission system, especially for a mobile radio system comprising at least two transmission units, each transmission unit having a transmission branch (1, 2) with a signal generating chain (11, 21) for providing a carrier and a signal amplifying chain (12, 13, 14, 22, 23), wherein the outputs of the signal amplifying chains are connected to a hybrid-combiner (30),
**characterized by**
means for connecting (34, 35a, 35b, 35c) each output port (30a, 30b) of the hybrid-combiner (30) to a separate antenna.

2. Transmission device of claim 1, wherein one of the output ports (30b) of the hybrid-combiner (30) is selectively connectable to a power resistor (33) or to a separate antenna by means of said means for connecting (34, 35b, 35c).

3. Transmission device of claim 1 or 2, wherein one of the output ports (30b) of the hybrid-combiner (30) is connected to a sense line (32) having a high impedance and is selectively connectable to a power resistor (33) or to a separate antenna by means of said means for connecting (34, 35b, 35c).

4. Transmission device of claim 3, wherein a capacitor (31) is coupled between said one output port (30b) of the hybrid-combiner (30) and the sense line (32).

5. Transmission device of any of the preceding claims, wherein the transmission units and the hybrid-combiner (30) is constructed as being a module to which said connector means (34, 35a, 35b, 35c) is mounted for selectively connecting the hybrid-combiner (30) to at least one respective separate antenna.

6. Transmission device of claim 5, wherein a power resistor (33) to which one of the output ports (30b) is connectable is part of the module or is externally provided.

7. Transmission device of any of the preceding claims, wherein the two transmission branches (1, 2) are additionally connectable to one another by means of a second connecting means (24) such that the same transmitted signal is routable at least via the signal amplifying chains (12, 13, 14, 22, 23) of the two transmission branches (1, 2).

8. Transmission device of any of the preceding claims, wherein the signal amplifier chain (12, 13, 14) of one of the transmission branches (1) includes a 90° phase shifting means (12).

9. Transmission device of claim 8, wherein the 90° phase shifting means (12) is arranged upstream of the hybrid-combiner (30).

10. Transmission device of claim 8 or 9, wherein the 90° phase shifting means (12) is arranged upstream of a power amplifier (13) of the signal amplifying chain (12, 13, 14).

11. Transmission and reception device of a transmission system, especially of a mobile radio system, **characterized by** a plurality of reception units and at least one transmission device of any of the preceding claims.

12. Transmission and reception device of claim 11, wherein the device is part of a base transceiver station, especially of a GSM-based mobile radio system.
